# EUROPÄISCHE PATENTSCHRIFT

(11) **EP 4 147 017 B1**
(45) Veröffentlichungstag und Bekanntmachung des Hinweises auf die Patenterteilung: **26.06.2024**
(21) Anmeldenummer: 21724564.6
(22) Anmeldetag: 29.04.2021
(51) Int. Cl.: G01G 19/03, G01G 11/00

(54) **MODULARE MESSTECHNISCHE VORRICHTUNG, INSBESONDERE FÜR EINE MEHRSPURIGE WAAGE**
MODULAR MEASURING DEVICE, IN PARTICULAR FOR A MULTI-TRACK WEIGHING MEANS
DISPOSITIF DE MESURE MODULAIRE, EN PARTICULIER POUR UN MOYEN DE PESAGE À PLUSIEURES VOIES

(30) Priorität: 07.05.2020 DE 102020112420
(43) Veröffentlichungstag der Anmeldung: 15.03.2023
(73) Patentinhaber: WIPOTEC GmbH, 67657 Kaiserslautern (DE)
(72) Erfinder: BURKART, Ralf, 67725 Börrstadt (DE); GOTTFRIEDSEN, Jan, 67714 Waldfischbach-Burgalben (DE); SCHULZKI, Alexander, 67705 Stelzenberg (DE)
(74) Vertreter: Eder Schieschke & Partner mbB
(86) Internationale Anmeldenummer: PCT/DE2021/100391
(87) Internationale Veröffentlichungsnummer: WO 2021/223804

(56) Entgegenhaltungen:
- EP-A1- 2 343 520
- EP-A1- 3 153 830
- JP-A- 2002 039 845

## Beschreibung

Die Erfindung betrifft eine modulare messtechnische Vorrichtung, insbesondere für eine mehrspurige Waage.

Mehrspurige Waagen bekannter Bauart weisen häufig Wägezellen auf, die nebeneinander und/oder hintereinander angeordnet sind, wobei jede Wägezelle zur Erfassung des Gewichts von Produkten ausgebildet ist. Üblicherweise liefert jede Wägezelle Messwerte, sei es in analoger oder digitaler Form, an eine jeweils zugeordnete Steuereinheit. Die Steuereinheit kann die zugeordnete Wägezelle derart ansteuern, dass ein oder mehrere Gewichtswerte eines Produkts zu vorgegebenen Zeitpunkten erfasst und nach deren Übertragung an die betreffende Steuereinheit von dieser ausgewertet, beispielsweise gemittelt, und gegebenenfalls an eine übergeordnete Steuereinheit übermittelt werden.

Hierzu ist es bekannt, die Steuereinheiten modulartig auszubilden und auf einer gemeinsamen durchgehenden Grundplatte vorzusehen, in welcher ein elektrischer Bus mit einer entsprechenden Anzahl von Steckplätzen ausgebildet ist.

Diese Bauart weist jedoch den Nachteil auf, dass die Grundplatte mit dem darin vorgesehenen elektrischen Bus zur Kontaktierung der einzelnen, modulartig ausgebildeten Steuereinheiten die Anzahl der Steckplätze von vornherein festlegt. Sind alle Steckplätze belegt, ist keine Erweiterung mehr möglich. Zudem ist die Baugröße für eine derartige Gesamt-Steuereinheit von vornherein festgelegt, unabhängig davon, wie viele Steckplätze tatsächlich mit Steuereinheiten belegt sind.

Weiterhin offenbart der Stand der Technik EP 2 343 520 A1 eine modulare mehrspurige Waage mit einem Basis-Grundmodul und einer Mehrzahl von Erweiterungsmodulen, wobei die Erweiterungsmodule einander benachbart angeordnet und jeweils lösbar mechanisch miteinander zu einem Stapel von Erweiterungsmodulen verbunden sind und wobei das Basis-Grundmodul lösbar mechanisch mit einem an einem Ende des Stapels liegenden Erweiterungsmodul des Stapels von Erweiterungsmodulen verbunden ist. Die offenbarte mehrspurige Waage weist jedoch keine Erweiterungsmodule auf, die jeweils aus einem Anbau-Grundmodul und einem mit diesem lösbar mechanisch und elektrisch verbunden Verbindungsmodul bestehen. In der offenbarten mehrspurigen Waage erfolgt die lösbare mechanische Verbindung der Module an zwei gemeinsamen und durchgängigen Querträgern und nicht ausschließlich durch lösbare benachbarte mechanische Verbindungen der Module. Eine Abdichtung gegen Staub und Feuchtigkeit ist bei der offenbarten mehrspurigen Waage nicht vorgesehen.

Ausgehend von diesem Stand der Technik liegt der Erfindung die Aufgabe zugrunde, eine modulare messtechnische Vorrichtung, insbesondere eine wägetechnische Vorrichtung, insbesondere für eine mehrspurige Waage, zu schaffen, welche flexibler ausgebildet ist und eine geringere Baugröße aufweist.

Die Erfindung löst diese Aufgabe mit den Merkmalen des Patentanspruchs 1.Weitere Ausgestaltungen der Erfindung ergeben sich aus den Unteransprüchen.

Die Erfindung geht von der Erkenntnis aus, dass auf eine gemeinsame, durchgehende und starre Grundplatte mit einem darin angeordneten Busverzichtet werden kann, wenn die gesamte modulare wägetechnische Vorrichtung aus einem Basis-Grundmodul und einer Mehrzahl von zu einem Stapel verbundenen, jeweils benachbarten Erweiterungsmodulen aufgebaut wird. Jedes Erweiterungsmodul besteht dabei aus einem Anbau-Grundmodul und einem mit dem Anbau-Grundmodul verbundenen Verbindungsmodul. Jeweils einander benachbarte Erweiterungsmodule sind elektrisch und mechanisch miteinander zu dem Stapel von Erweiterungsmodulen verbunden. Das Basis-Grundmodul ist elektrisch und mechanisch mit einem der außen liegenden Erweiterungsmodule des Stapels von Erweiterungsmodulen (d.h. an einem Ende des Stapels befindlichen Erweiterungsmodule) verbunden. Die mechanische und elektrische Verbindung der Erweiterungsmodule untereinander und die mechanische und elektrische Verbindung des Basis-Grundmoduls mit dem benachbarten Erweiterungsmodul erfolgen ausschließlich durch eine elektrische und mechanische Verbindung der jeweils benachbarten Anbau-Grundmodule untereinander und der elektrischen und mechanischen Verbindung des Basis-Grundmoduls mit dem Anbau-Grundmodul des benachbarten Erweiterungsmoduls. Es ist ebenfalls möglich, dass das Basis-Grundmodul mit einer Mehrzahl von Stapeln von Erweiterungsmodulen verbunden ist, beispielsweise in linearer Form an zwei gegenüberliegenden Seiten oder in einer sternförmigen Variante, wobei das Basis-Grundmodul quasi als Nabe oder zentraler Punkt des Sterns vorgesehen ist. Es ist jedoch auch möglich, die Mehrzahl von Stapeln von Erweiterungsmodulen an entsprechenden beliebig positionierten mechanischen und elektrischen Verbindungsanschlüssen des Basis-Grundmoduls vorzusehen.

Es ist beispielsweise möglich, zwei oder mehrere Stapel von Erweiterungsmodulen so an einer Seite des Basis-Grundmoduls anzuordnen, dass die Verbindungmodule der Stapel zueinander fluchtend (in der Richtung senkrecht zur Richtung, in welcher die Erweiterung erfolgen kann) vorgesehen sind. Auf diese Weise können schmale, parallele Wägespuren realisiert werden.

In all diesen Fällen kann für sämtliche Stapel von Erweiterungsmodulen derselbe elektrische (mindestens eine) Bus (oder auch eine entsprechende Mehrzahl von Bussen) verwendet werden. Alternativ kann auch für jeden der Stapel ein eigener elektrischer Bus bzw. eine Mehrzahl von jeweils separat zugeordneten (eigenen) Bussen verwendet werden.

Erfindungsgemäß wird erreicht, dass die Anzahl der Erweiterungsmodule in jedem Stapel beliebig variiert werden kann. Denn es muss lediglich ein zusätzliches Anbau-Grundmodul hinzugefügt und ein Verbindungsmodul mit dem hinzugefügten Anbau-Grundmodul verbunden werden. Dadurch ergibt sich gleichzeitig der Vorteil, dass die tatsächliche Baugröße nur von der Anzahl der vorhandenen Erweiterungsmodule abhängig ist. Eine derart aufgebaute modulare wägetechnische Vorrichtung beansprucht lediglich den Bauraum, der zwingend für die Anzahl von vorhandenen Erweiterungsmodulen erforderlich ist. Die Erweiterungsmodule können, in der Längsrichtung des Stapels von Erweiterungsmodulen gesehen (in welcher eine Erweiterung möglich ist), eine unterschiedliche Breite aufweisen. Beispielsweise können als Wägezellen ausgebildete Verbindungsmodule unterschiedliche Breiten aufweisen, um eine Mehrspurwaage mit unterschiedlich breiten Spuren zu realisieren. Die Breite der zugehörigen Anbau-Grundmodule muss dabei mindestens so groß sein, wie die Breite der betreffenden Verbindungsmodule.

Nach einer Ausgestaltung der Erfindung sind das Basis-Grundmodul und das Anbau-Grundmodul des benachbarten Erweiterungsmoduls und die Anbau-Grundmodule jeweils benachbarter Erweiterungsmodule jeweils mittels zumindest eines elektrischen Busanschlusses elektrisch verbunden, wobei die elektrische Verbindung jeweils als Steckerverbindung ausgebildet ist, die gleichzeitig eine mechanische Verbindung bewirkt. Hierdurch ergibt sich eine äußerst einfache Montage. Selbstverständlich kann jedoch auch zusätzlich zur Steckerverbindung zwischen jeweils zwei benachbarten Anbau-Grundmodulen bzw. zwischen dem Basis-Grundmodul und seinem benachbarten Anbau-Grundmodul eine weitere mechanische Verbindung, beispielsweise eine Rastverbindung oder eine Schraubverbindung, vorgesehen sein.

Jeweils benachbarte Anbau-Grundmodule und das Basis-Grundmodul und das benachbarte Grundmodul können an einander zugewandten Stirnseiten komplementäre Stecker zur Bildung der Steckerverbindung aufweisen, wobei die Stecker vorzugsweise so ausgebildet sein können, dass sich die einander zugewandten Stirnseiten im verbundenen Zustand berühren oder nur ein geringer Spalt verbleibt, der vorzugsweise kleiner als 1 mm, höchst vorzugsweise kleiner als 0,5 mm ist. Die Anbau-Grundmodule können dabei eine identische Baugröße und auch Bauform aufweisen. Beispielsweise können die Anbau-Grundmodule jeweils quaderförmig und länglich ausgebildet sein, wobei die Stecker an den langen Stirnseiten vorgesehen sind. Die miteinander verbundenen Anbau-Grundmodule bilden somit eine modular aufgebaute Grundplatte. Die Steckerverbindungen können dabei auch durch das Vorsehen von Dichtmitteln so ausgestaltet sein, dass eine staub- und wasserdichte Verbindung der elektrischen Anschlüsse zwischen den jeweils benachbarten Komponenten gegeben ist.

Nach einer weiteren Ausgestaltung der Erfindung ist jedes Anbau-Grundmodul an einer Oberseite mittels einer elektrischen Steckerverbindung mit dem zugeordneten Verbindungsmodul elektrisch und mechanisch verbunden. Die Steckerverbindung kann dabei durch das Vorsehen von Dichtmitteln so ausgestaltet sein, dass eine staub- und wasserdichte Verbindung der elektrischen Anschlüsse zwischen dem Anbau-Grundmodul und dem zugeordneten Verbindungsmodul gegeben ist. Die Verbindungsmodule können einfach und schnell von dem betreffenden Anbau-Grundmodul gelöst und ausgetauscht werden.

Die im Wesentlichen staub- und wasserdichte Verbindung kann sowohl bei der Verbindung der Anbau-Grundmodule untereinander bzw. mit dem Basis-Grundmodul als auch bei der Verbindung der Anbau-Grundmodule mit den Verbindungsmodulen derart erfolgen, dass an zumindest einem der komplementären Stecker (bzw. Buchsen) der jeweiligen Steckverbindung ein Dichtmittel vorgesehen ist, welches im montierten Zustand der betreffenden Module die gewünschte staub- bzw. Wasserdichtheit erzeugt. Der Begriff "wasser- und staubdicht" im Rahmen dieser Beschreibung ist so zu verstehen, dass nicht zwingend eine unter allen Umständen dichte Verbindung gewährleistet werden muss, sondern dass eine für den jeweiligen Verwendungszweck ausreichende Dichtheit gegeben ist, insbesondere nach einer Industrienorm, wie z.B. DIN EN 60529. Gemäß dieser Norm kann insbesondere eine Dichtheit in den Klassen IP64 bis IP69 gewährleistet sein, wobei in vielen Fällen die Klassen 64 und 65 zur Anwendung kommen wird.

Diese elektrische Steckerverbindung auf der Seite des Anbau-Grundmoduls, d.h. der elektrische Stecker, der an dem Anbau-Grundmodul vorgesehen ist, kann dabei vorzugsweise sämtliche Busanschlüsse des zumindest einen Busanschlusses für das betreffende Verbindungsmodul bereitstellen, d. h. sämtliche elektrische Busse, welche vom Basis-Grundmodul über jedes der Anbau-Grundmodule bis zum letzten Anbau-Grundmodul des Stapels von Erweiterungsmodulen durchgeschleift sind. Hierdurch ist es möglich, die Verbindungsmodule so zu gestalten, dass diese sämtliche oder auch lediglich ausgewählte Busanschlüsse verwenden. In der Praxis wird man sich in den meisten Fällen jedoch mit einem einzigen Busanschluss, d. h. einem einzigen Typ eines elektrischen Busses begnügen, das vom Basis-Grundmodul bis zum letzten Anbau-Grundmodul durchgeschleift ist.

Nach einer Ausgestaltung der Erfindung kann jedes Verbindungsmodul durch eine zusätzliche mechanische Verbindung, vorzugsweise mittels einer Schraub- oder Rastverbindung, mit dem jeweiligen Anbau-Grundmodul verbunden sein. Hierdurch ergibt sich eine auch gegenüber Schwingungen und Vibrationen sichere Montage der Verbindungsmodule auf dem jeweiligen Anbau-Grundmodul. Im Fall von als Wägezellen ausgebildeten Verbindungsmodulen kann hierdurch auch die Position der Wägezelle, insbesondere die Position des Lastaufnehmers, exakt eingenommen und fixiert werden.

In einer weiteren vorteilhaften Variante sind alle Anbau-Grundmodule identisch ausgebildet. Allerdings weist bei dieser Ausführungsform auch das letzte Anbau-Grundmodul, welches sich an der nicht mit dem Basis-Grundmodul verbundenen Seite des Stapels von Erweiterungsmodulen befindet, den wenigstens einen Busanschluss auf, der mit einem weiteren Anbau-Grundmodul verbunden werden kann. Soll die gesamte modulare wägetechnische Vorrichtung staubgeschützt und im Wesentlichen wasserdicht ausgebildet sein, wäre es hier erforderlich, den Busanschluss entsprechend dicht zu verschließen. Dies kann selbstverständlich mit einer entsprechenden Abdeckung oder Kappe geschehen.

Nach einer anderen Variante sind alle Anbau-Grundmodule mit Ausnahme des letzten Anbau-Grundmoduls, das am Ende des Stapels von Erweiterungsmodulen angeordnet ist, das nicht mit dem Basis-Grundmodul verbunden ist, identisch ausgebildet. Lediglich das letzte Anbau-Grundmodul weist an der Stirnseite, die nicht mit einem weiteren Anbau-Grundmodul verbunden ist, keinen Stecker auf. Bei dieser Variante existieren also zwei unterschiedliche Typen von Anbau-Grundmodulen, nämlich ein erster Typ (Mitteltyp), der an beiden Stirnseiten entsprechende Busanschlüsse aufweist und ein zweiter Typ (Endtyp), der lediglich an der derjenigen Seite, die dem vorletzten Anbau-Grundmodul benachbart ist, den wenigstens einen Busanschluss aufweist. Bei dieser Variante sind keine Maßnahmen zur Abdichtung eines Busanschlusses bzw. Steckers erforderlich. Allerdings muss bei einer Erweiterung mit zusätzlichen Erweiterungsmodulen das letzte Anbau-Grundmodul, welches als Endtyp ausgestaltet ist, demontiert werden, bevor weitere, als Mitteltyp ausgestaltete Anbau-Grundmodule eingefügt werden können.

Nach einer weiteren Ausgestaltung der Erfindung kann jedes Anbau-Grundmodul ein mechanisches Verbindungsmittel zur mechanischen Verbindung des Anbau-Grundmoduls mit einem Trägerelement, beispielsweise einem Gehäuse, aufweisen. Hierdurch kann die gesamte modulare wägetechnische Vorrichtung auf einfache Weise sicher mit dem Trägerelement verbunden werden. Dabei ist es nicht zwingend erforderlich (jedoch grundsätzlich selbstverständlich möglich), dass jedes der Anbau-Grundmodule mit dem Trägerelement verbunden wird. Vielmehr genügt es, eine derartige Verbindung an einigen der Module vorzunehmen, beispielsweise am Basis-Grundmodul, das ebenfalls ein entsprechendes Verbindungsmittel aufweisen kann, und dem letzten Anbau-Grundmodul. Bei größeren Stapeln von Erweiterungsmodulen kann selbstverständlich auch an einem oder mehreren dazwischenliegenden Anbau-Grundmodulen eine Verbindung zu dem Trägerelement hergestellt werden.

Erfindungsgemäß sind die Verbindungmodule als elektronische Auswerte- und/oder Steuereinheiten für wägetechnische Komponenten, insbesondere Wägezellen, Kraftsensoren oder Beschleunigungssensoren, ausgebildet, wobei die Verbindungsmodule vorzugsweise als Steckerverbindungen ausgebildete elektrische Anschlüsse für die elektrische Verbindung der zugeordneten wägetechnischen Komponenten aufweisen. Dabei ist es selbstverständlich möglich, auch jeweils unterschiedliche Typen von Verbindungsmodulen auf den (vorzugsweise identisch ausgebildeten) Anbau-Grundmodulen vorzusehen.

Weiterhin können eines, mehrere oder alle der Verbindungmodule als Wägezellen ausgebildet. Die Wägezellen können ihre zugehörigen Elektronikkomponenten bereits teilweise oder vollständig enthalten. Hierdurch wird also eine modulare wägetechnische Vorrichtung geschaffen, die die Grundeinheit einer mehrspurigen Waage bildet. Die als Verbindungmodule ausgestalteten Wägezellen können dabei so ausgebildet sein, dass sie lediglich an ihrer Unterseite eine elektrische Verbindung, insbesondere eine Steckerverbindung, zur Verbindung mit dem jeweiligen Anbau-Grundmodul aufweisen. Derartige Wägezellen weisen, beispielsweise an der Oberseite, eine Durchführung für den Lastaufnehmer auf, der zur Einleitung der zu erfassenden Gewichtskraft auf die Wägezelle dient. Derartige Wägezellen können jedoch auch so ausgebildet sein, dass zusätzlich zu dem Lastaufnehmer ein elektrischer Anschluss vorgesehen ist, insbesondere in Form eines Steckers, der zur Verbindung mit einer weiteren Komponente dient, beispielsweise einem Förderband, welches als Vorlast auf dem Lastaufnehmer sitzt. Im Stand der Technik existieren hierzu auch Ausführungsformen, bei welcher der elektrische Anschluss in dem Lastaufnehmer integriert ist.

Es wäre in diesem Fall auch möglich, die als Verbindungsmodul ausgebildeten Wägezellen jeweils integriert mit dem betreffenden Anbau-Grundmodul auszubilden. In diesem Fall entfällt die elektrische und mechanische Verbindung zwischen dem Anbau-Grundmodul und dem Verbindungsmodul. Die Wägezellen können dabei die gesamte Elektronik beinhalten, die zur Erfassung und Aufbereitung der Messwerte für die zu erfassende Gewichtskraft erforderlich ist. Die Messwerte können dann zur weiteren Verarbeitung bzw. Weiterleitung an eine übergeordnete Steuereinheit über den wenigstens einen elektrischen Bus zu dem Basis-Grundmodul übertragen werden.

Nach einer Ausgestaltung der Erfindung können die Verbindungsmodule Einstellmittel, insbesondere Schalter, zur Einstellung einer Busadresse des jeweiligen Verbindungsmoduls aufweisen, wobei die Einstellmittel vorzugsweise am Umfang eines Bundes eines Steckers vorgesehen sind, welcher in einen damit zusammenwirkenden Stecker des betreffenden Anbau-Grundmoduls eingreift. Auf diese Weise müssen die Einstellmittel bzw. Schalter nicht zusätzlich gegen Umwelteinflüsse, insbesondere Staub und Feuchtigkeit, geschützt werden. Dies gilt insbesondere dann, wenn die betreffende Steckerverbindung dichtend ausgebildet ist.

Das Basis-Grundmodul, die Anbau-Grundmodule und die Verbindungsmodule weisen erfindungsgemäß jeweils ein geschlossenes Gehäuse auf, insbesondere ein im Wesentlichen staubdichtes und wasserdichtes Gehäuse. Unter einem "geschlossenen Gehäuse" wird dabei auch ein Gehäuse verstanden, welches nur noch an nach außen geführten elektrischen Steckern undichte Stellen (im Fall der Verwendung von nicht dichten elektrischen Steckern) aufweist. Die vollständige Dichtheit kann in diesem Fall dadurch erreicht werden, dass die betreffende elektrische Steckerverbindung zusammen mit dem komplementären elektrischen Stecker eines benachbarten weiteren Moduls hergestellt wird. Die zusammenwirkenden Stecker können bereits im gesteckten Zustand eine ausreichende Dichtheit aufweisen. Zusätzlich können die einander zugewandten Stirnseiten der benachbarten Module unmittelbar aneinander liegen und/oder ein Dichtmittel, wie eine die Steckverbindung umgebende Dichtung. Diese Dichtung kann auf der Oberfläche einer oder beider der einander zugewandten Gehäusewandungen vorgesehen sein und eine solche Elastizität aufweisen, dass bei einem Herstellen der Steckverbindung die gewünschte Dichtheit erzeugt wird. Eine Erhöhung desAnpressdrucks zwischen den einander zugewandten Stirnseiten der betreffenden Gehäuse kann dadurch erfolgen, dass zusätzlich eine mechanische Verbindung zwischen den jeweils benachbarten Modulen bzw. deren Gehäusen hergestellt wird, beispielsweise durch Verschrauben.

aufweisen, so dass die Gehäuse der benachbarten Module im montierten Zustand dicht sind. Das Gehäuse, insbesondere das Gehäuse für ein Verbindungsmodul bzw. eines als Wägezelle ausgebildeten Erweiterungsmoduls (bei dem das als Wägezelle ausgebildete Verbindungsmodul integriert mit dem Anbau-Grundmodul ausgebildet ist), kann hierzu zweiteilig' ausgebildet sein. Ein erstes Gehäuseteil in Form eines behälterartigen oder topfförmigen Teils, welches aus einem Boden mit einer integrierten Seitenwandung besteht, kann mit einem zweiten Gehäuseteil in Form eines beispielsweise ebenen Deckels verbunden sein, wobei zwischen dem Deckel und der Seitenwandung eine dichte Verbindung ausgebildet ist. Selbstverständlich kann ein derartiges Gehäuse auch aus zwei behälterartigen Hälften bestehen, wobei die mit dem Boden- bzw. Deckelteil integrierten Seitenwandungen dicht verbunden sind.

Das Gehäuse kann dabei auch optische Status-Anzeigeeinrichtungen, beispielsweise LEDs, aufweisen, wobei die Statusanzeige von außen (d. h. bei geschlossenem Gehäuse) sichtbar ist. Dies gilt insbesondere für Gehäuse für Verbindungsmodule, unabhängig davon, ob diese als reine Elektronikmodule oder als Wägezellen ausgebildet sind, und für als Wägezellen ausgebildete integrierte Erweiterungsmodule.

Nach einer weiteren Ausführungsform der Erfindung kann das Basis-Grundmodul eine Stromversorgung für die Erweiterungsmodule, insbesondere die Verbindungsmodule, aufweisen oder bereitstellen (z.B. indem eine Stromversorgungsleitung durch das Basis-Anbaumodul durchgeschleift wird). Die Stromversorgung kann dabei über vorbestimmte Leitungen bzw. Anschlüsse des elektrischen Busses bzw. der Busanschlüsse laufen.

Das Basis-Grundmodul kann auch eine Steuereinheit aufweisen, die für die Steuerung der Verbindungsmodule und/oder der damit verbundenen messtechnischen, insbesondere wägetechnischen, Komponenten und/oder zur Erfassung und/oder Weiterleitung und/oder Auswertung der Signale und/oder Messwerte, die von den Verbindungsmodulen geliefert werden, ausgebildet ist. Auf diese Weise kann zum Beispiel eine Synchronisierung der Messwerterfassung der Verbindungsmodule erfolgen, entweder gesteuert durch das Basis-Grundmodul oder, bei entsprechend durchgeschleiften bzw. weitergeleiteten Signalen, von einer übergeordneten Steuereinheit.

Schließlich kann das Basis-Grundmodul elektrische Anschlüsse zur Verbindung mit einer übergeordneten Steuereinheit aufweisen, wobei über diese elektrische Verbindung selbstverständlich auch eine bidirektionale Kommunikation zwischen dem Basis-Grundmodul und der übergeordneten Steuereinheit ermöglicht werden kann.

Die Erfindung wird nachstehend anhand in der Zeichnung dargestellter Ausführungsformen näher erläutert. In der Zeichnung zeigen
- Fig. 1: eine perspektivische Ansicht einer ersten Ausführungsform einer modularen messtechnischen, insbesondere wägetechnischen Vorrichtung nach der Erfindung bestehend aus einem Basis-Grundmodul und 13 Erweiterungsmodulen;
- Fig. 2: eine Seitenansicht (Fig. 2a) und eine Draufsicht (Fig. 2b) einer zweiten Ausführungsform mit lediglich zwei Erweiterungsmodulen, wobei von den Erweiterungsmodulen lediglich die Anbau-Grundmodule ohne darin eingesteckte Verbindungsmodule und die Module in nicht montiertem Zustand gezeigt sind;
- Fig. 3: eine Seitenansicht (Fig. 3a) und eine Draufsicht (Fig. 3b) der Ausführungsform in Fig. 2 in montiertem Zustand,
- Fig. 4: eine Seitenansicht (Fig. 4a) und eine Draufsicht (Fig. 4b) der Ausführungsform in Fig. 2 und 3, wobei die Erweiterungsmodule vollständig dargestellt sind, d.h. mit in die Anbau-Grundmodule eingesteckten Verbindungsmodulen;
- Fig. 5: ein Verbindungsmodul, welches als reines Elektronikmodul ausgebildet ist; und
- Fig. 6: ein Verbindungsmodul, welches als Wägezelle ausgebildet ist.

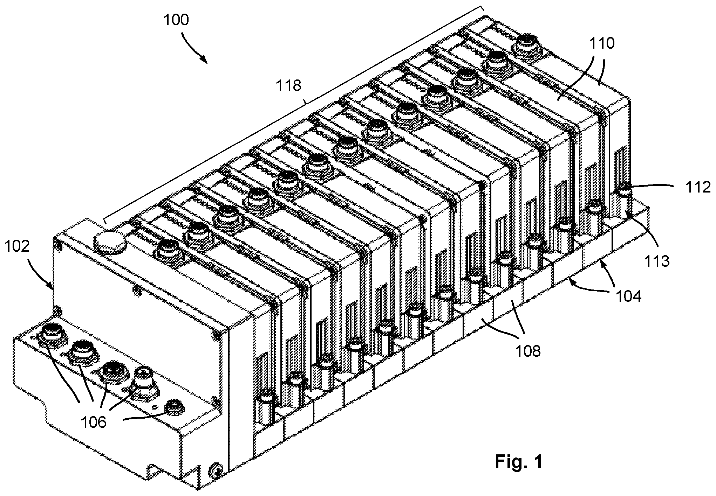

Die in Fig.1 dargestellte erste Ausführungsform einer modularen messtechnischen Vorrichtung 100 stellt eine reine Elektronikeinheit für eine wägetechnische Vorrichtung in Form einer Mehrspurwaage dar. Sie besteht aus einem Basis-Grundmodul 102 und insgesamt 13 damit lösbar verbundenen Erweiterungsmodulen 104. Das Basis-Grundmodul 102 kann beispielsweise eine Stromversorgung für die Erweiterungsmodule 104 und eine elektrische Buseinheit (nicht sichtbar) zur Steuerung der Kommunikation zwischen einer ebenfalls im Basis-Grundmodul 102 vorgesehenen zentralen Steuereinrichtung (nicht sichtbar) und den Erweiterungsmodulen 104 über wenigstens einen elektrischen Bus umfassen. Weiterhin kann das Basis-Grundmodul 102 mehrere Anschlüsse 106, insbesondere Anschlüsse für die elektrische Energieversorgung und wenigstens einen Anschluss für eine Kommunikationsverbindung mit einer übergeordneten Steuereinheit (nicht dargestellt) aufweisen. Weiterhin können die Anschlüsse 106 auch einen oder mehrere Anschlüsse aufweisen, an welchen der eine oder die mehreren elektrischen Busses, an welchen die Erweiterungsmodule (104) angeschlossen sind, lediglich durchgeschleift sind.

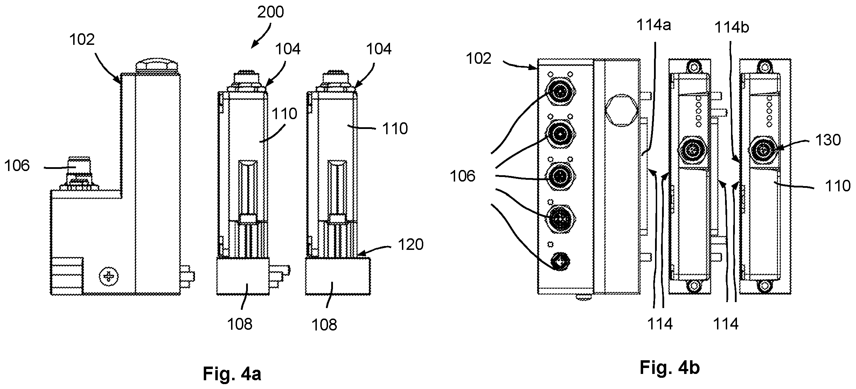

Wie aus Fig. 1 ersichtlich, bestehen die Erweiterungsmodule 104 jeweils aus einem Anbau-Grundmodul 108 und einem Verbindungsmodul 110. Jedes der im dargestellten Ausführungsbeispiel im Wesentlichen quaderförmig ausgebildeten Verbindungsmodule 108 ist lösbar mechanisch und elektrisch mit dem ebenfalls quaderförmig und länglich ausgebildeten zugeordneten Anbau-Grundmodul 108 verbunden. Die mechanische Verbindung kann beispielsweise mittels zweier Schrauben 112 erfolgen, wobei jede der Schrauben 112 durch eine Bohrung in einer an beiden Schmalseiten eines Verbindungsmoduls 108 vorgesehenen Vorkragung 113 (siehe auch die Fig. 4, 5, 6) ragt und in eine Gewindebohrung im betreffenden Anbau-Grundmodul eingreift. Die mechanische Verbindung kann jedoch auf jede beliebige andere Weise erfolgen, beispielsweise durch eine Clip- oder Rastverbindung.

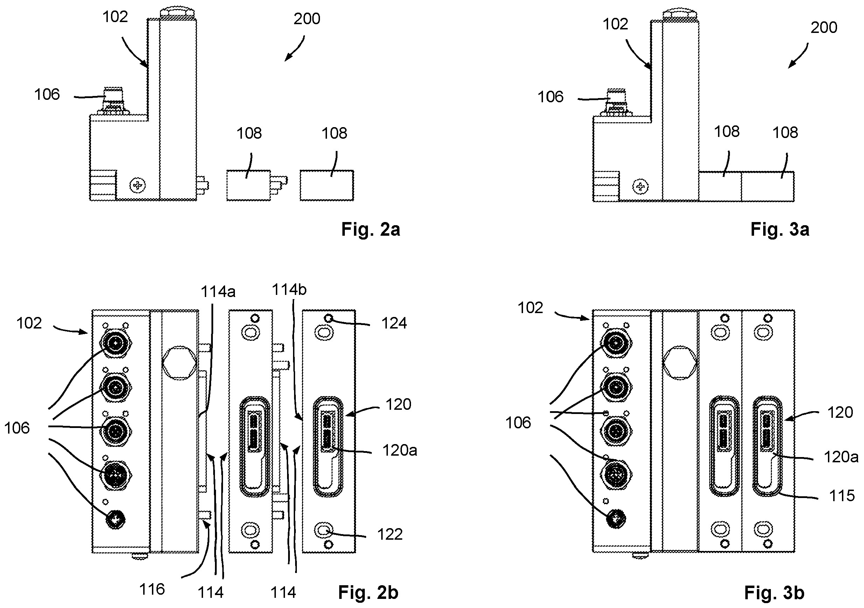

Fig. 2a zeigt eine Ausführungsform einer modularen wägetechnischen Vorrichtung 200, welche aus lediglich einem Basis-Grundmodul 102 und zwei Erweiterungsmodulen besteht, von denen jeweils nur das Anbau-Grundmodul 108 dargestellt ist. In der entsprechenden Draufsicht dieser Vorrichtung 200, die Fig. 2b zeigt, ist erkennbar, dass das mittlere Anbau-Grundmodul 108 sowohl über eine elektrische Steckerverbindung 114 (es ist nur der elektrische Stecker auf der Seite des Basis-Grundmoduls 102 zu sehen) als auch über eine mechanische Verbindung 116, die bei der dargestellten Ausführungsform zwei Stifte auf der Seite des Basis-Grundmoduls 102 und zwei entsprechende Bohrungen auf der Seite des Anbau-Grundmoduls 108 (nicht zu erkennen) umfasst, mit dem Basis-Grundmodul 102 lösbar verbunden werden kann. Die mechanische Verbindung zwischen zwei benachbarten Anbau-Grundmodulen 108 umfasst im dargestellten Ausführungsbeispiel vier Stifte, die in jeweils eine Bohrung eingreifen. Die mechanische Verbindung 116, die bei der dargestellten Ausführungsform als Steckverbindung ausgeführt ist, kann so ausgeführt sein, dass mechanische Haltekräfte durch den Reibschluss zwischen den Stiften und den Innenwandungen der zugeordneten Bohrungen erzeugt werden. Die mechanische Verbindung kann jedoch auch auf beliebige andere Art und Weise erfolgen, beispielsweise durch eine Clip- oder Rastverbindung oder eine Schraubverbindung. Die elektrische Steckerverbindung 114 ist bei der dargestellten Variante so ausgebildet, dass das Basis-Grundmodul 102 und jedes Anbau-Grundmodul 108, welchem ein weiteres Anbau-Grundmodul 108 benachbart ist, auf seiner in den Fig. 2a und 2b rechten Seite einen elektrischen Stecker 114a aufweist, welcher in einen hierzu komplementären Stecker 114b auf der jeweils linken Seite aller Anbau-Grundmodule 108 eingreift. Die elektrische Steckerverbindung 114 kann dabei auch so ausgebildet sein, dass sie neben einer rein elektrischen Verbindung auch eine mechanische Steckverbindung mit entsprechenden Haltekräften (insbesondere Auszugskräften beim Trennen benachbarter Module) darstellt.

Über die Steckerverbindung 114 wird der wenigstens eine elektrische Bus zwischen dem Basis-Grundmodul 102 und allen Anbau-Grundmodulen 108 durchgeschleift. Hierzu kann auch für jeden elektrischen Bus eine separate Steckverbindung verwendet werden. Im Regelfall wird jedoch für die Datenübertragung zwischen den Erweiterungsmodulen 104 und dem Basis-Grundmodul ein einziger elektrischer Bus verwendet werden. Das Basis-Grundmodul 102 kann jedoch so ausgebildet sein, dass zur Datenübertragung zwischen ihr und einer übergeordneten Steuereinheit verschiedene Anschlüsse 106 vorgesehen sind, wobei jeder Anschluss nicht nur die Spezifikationen an eine andere (mechanische) Steckernorm erfüllen kann, sondern auch die Anforderungen eine andere Übertragungsnorm oder ein anderes Übertragungsprotokoll.

Weiterhin ist in den Fig. 2a und 2b zu erkennen, dass das letzte der Anbau-Grundmodule 108 eines Stapels 118 von Erweiterungsmodulen 104, d. h. das äußerste Anbau-Grundmodul 108 eines Stapels 118, das nicht mit dem Basis-Grundmodul 102 verbunden ist, keinen weiteren Steckeranschluss 114a aufweist. Ein derartiges Anbau-Grundmodul 108 kann auch als Endmodul bezeichnet werden. Das Vorsehen eines Endmoduls ist optional. Stattdessen kann auch ein "normales" Anbau-Grundmodul 108 verwendet werden, das die Möglichkeit einer Erweiterung ohne jegliche Änderung bietet.

Allerdings besteht der Vorteil eines Endmoduls darin, dass keine offene elektrische Schnittstelle verbleibt oder eine solche durch zusätzliche Maßnahmen geschlossen werden muss, wenn die Forderung besteht, die gesamte Vorrichtung 100, 200 unempfindlich gegen Umwelteinflüsse zu gestalten, z.B. staub- und oder wasserdicht nach einer vorgegebenen Industrienorm (z.B. IP65).

Zu diesem Zweck kann die Steckerverbindung 114 und/oder auch generell der Anschluss der einander zugewandten Seiten der Anbau-Grundmodule 108 bzw. des Basis-Grundmoduls 102 entsprechend dicht ausgebildet sein. Hierzu können Dichtmittel vorgesehen sein, wie Dichtlippen, zwischen den Steckern 114a, 114b vorgesehene Dichtungen, eine umlaufende Dichtung 115 an den einander zugewandten Stirnseiten der Module 108, 102 oder dergleichen. Es kann jedoch bereits ausreichen, wenn die einander zugewandten Stirnseiten der beiden Module 108 bzw. 102 und 108 komplementär (insbesondere) zueinander ausgebildet sind und zumindest in einem umlaufenden Teilbereich unmittelbar aneinander anliegen. Fig. 3 zeigt die in Fig. 2 voneinander getrennt gezeigten Module in zusammengesetztem bzw. montiertem Zustand.

In den Draufsichten nach Fig. 2b und Fig. 3b ist weiterhin erkennbar, dass jedes Anbau-Grundmodul 108 an seiner Oberseite einen elektrischen Stecker 120a einer elektrischen Steckerverbindung 120 zwischen dem Anbau-Grundmodul 108 und dem zugeordneten Verbindungsmodul 110 aufweist. Der zusammengesteckte bzw. montierte Zustand der Module 108 und 110 der Ausführungsform einer modularen wägetechnischen Vorrichtung 200 mit einem Basis-Grundmodul 102 und zwei Erweiterungsmodulen ist aus Fig. 4 ersichtlich, wobei Fig. 4a eine Seitenansicht und Fig. 4b eine Draufsicht zeigen. In Fig. 4 sind die Erweiterungsmodule 104 und das Basis-Grundmodul noch in einem nicht verbundenen Zustand gezeigt. Die Steckerverbindung 120 dient zum Anschluss des betreffenden Verbindungsmoduls 110 an den wenigstens einen elektrischen Bus, der über das Anbau-Grundmodul zur Verfügung gestellt wird.

Die Steckerverbindung 120 zwischen einem Anbau-Grundmodul 108 und einem Verbindungsmodul 110 kann, ebenso wie die Steckerverbindung 114 so ausgebildet sein, dass elektrische Kontakte der Steckerverbindung 120 gegenüber Umwelteinflüssen, insbesondere Staub und Feuchtigkeit bzw. Wasser, geschützt sind und eine vorgegebene Industrienorm, beispielsweise IP65, erfüllt ist. Hierzu kann die Steckerverbindung 120 aus elektrischen Steckern 120a bestehen, die im gesteckten Zustand mittels geeigneter Dichtmittel entsprechend abgedichtet sind. Alternativ oder zusätzlich kann selbstverständlich auch an den einander zugewandten Stirnseiten des Anbau-Grundmoduls 108 (d. h. im dargestellten Ausführungsbeispiel dessen Oberseite) und des Verbindungsmoduls 110 (d.h. im dargestellten Ausführungsbeispiel dessen Unterseite) ein Dichtmittel geeigneter Art, beispielsweise eine umlaufende Dichtung aus einem abdichtenden elastischen Material, vorgesehen sein. Es kann jedoch bereits ausreichen, wenn die einander zugewandten Stirnseiten der beiden Module 108, 110 komplementär (insbesondere) zueinander ausgebildet sind und zumindest in einem umlaufenden Teilbereich unmittelbar aneinander anliegen.

Die Draufsichten nach Fig. 2b und Fig. 3b zeigen Bohrungen 122 in den seitlichen Bereichen der Anbau-Grundmodule 108, die für das Befestigen der Anbau-Grundmodule 108 an einem Trägerelement (nicht dargestellt), beispielsweise einem Gehäuse einer Waage oder einem Maschinengestell, mittels einer Schraubverbindung dienen. Hierzu können nicht dargestellte Schrauben die Bohrungen 122 durchgreifen und in entsprechende Gewindebohrungen in dem Trägerelement eingreifen.

Weiterhin zeigen die Draufsichten nach Fig. 2b und Fig. 3b Gewindebohrungen 124, in welche die Schrauben 112, die durch die seitlichen Vorkragungen 113 der Verbindungsmodule 110 ragen, zur Fixierung der Verbindungsmodule 110 auf dem betreffenden Anbau-Grundmodul 108 eingreifen.

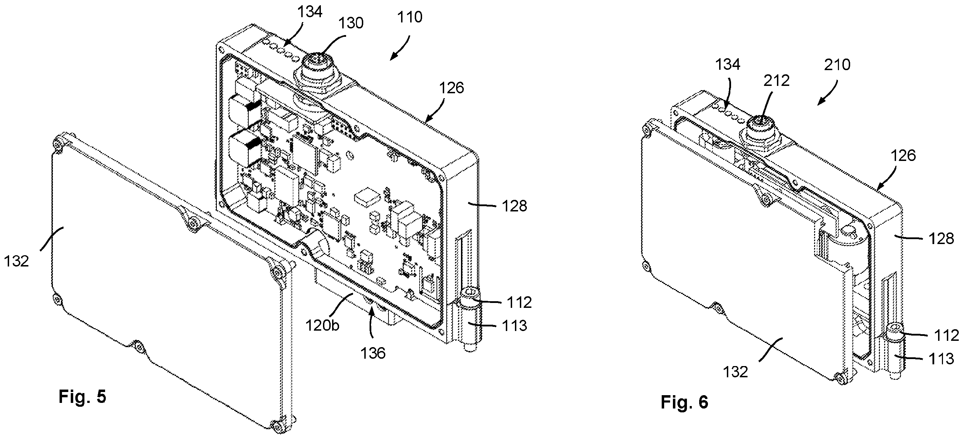

Fig. 5 zeigt ein Verbindungsmodul 110, das als reines Elektronikmodul ausgebildet ist. Das Verbindungsmodul 110 weist ein Gehäuse 126 auf, das zweiteilig ausgebildet ist. In einem topfförmig ausgebildeten Teil 128, welches einen im Wesentlichen ebenen Boden und eine hierzu im Wesentlichen senkrecht verlaufende, umlaufende Seitenwandung aufweist, ist die auf einer Leiterplatte angeordnete Elektronik vorgesehen. Die Elektronik kann in üblicher Weise in dem topfförmigen Gehäuseteil 128 befestigt sein, beispielsweise mittels einer Schraubverbindung oder einer Clipverbindung. Die Elektronik weist elektrische Anschlüsse zu einem elektrischen Stecker 120b der elektrischen Steckerverbindung 120 zwischen dem Verbindungsmodul 110 und dem zugeordneten Anbau-Grundmodul 108 auf. Der eigentliche Stecker kann auch von einem Dom oder Flansch umgeben sein, welcher einstückig mit dem Gehäuse ausgebildet oder dicht mit diesem verbunden ist. Im Sinne dieser Beschreibung wird ein derartiger Dom oder Flansch als vom Begriff "Stecker" umfasst angesehen. Weiterhin weist die Elektronik elektrische Anschlüsse auf, die mit einem elektrischen Stecker 130 verbunden sind. Der Stecker 130 bzw. die betreffenden Anschlüsse dienen zum Anschluss einer weiteren Komponente, beispielsweise einer Wägezelle, an das Verbindungsmodul 110. Das topfförmige Gehäuseteil 128 wird mittels eines, im dargestellten Ausführungsbeispiel, im Wesentlichen ebenen Gehäusedeckels 132 verschlossen. Zwischen dem Gehäusedeckel 132 und der Stirnfläche der Seitenwandung des topfförmigen Gehäuseteils 128 kann eine Dichtung vorgesehen sein, um einen ausreichenden Schutz der Elektronik gegen Umwelteinflüsse, insbesondere Staub und Feuchtigkeit bzw. Wasser, zu gewährleisten. Die Befestigung des Gehäusedeckels 132 an dem topfförmigen Gehäuseteil 128 kann lösbar, beispielsweise mittels einer Schraubverbindung, erfolgen.

In einer Gehäusewandung des Gehäuses 126 kann eine optische Anzeige 134, beispielsweise in Form von Status-LEDs, vorgesehen sein. Im dargestellten Ausführungsbeispiel ist in der (in montiertem Zustand) oberen Seitenwandung des topfförmigen Gehäuseteils 128 eine Zeile von Status-LEDs vorgesehen. Diese LEDs können beispielsweise die Bereitschaft zur Kommunikation mit dem Basis-Grundmodul, eine vorhandene Stromversorgung, den vorhandenen Anschluss einer weiteren Komponente, beispielsweise einer Wägezelle, an dem elektrischen Stecker 130 und der gleichen anzeigen.

Der Stecker 120b kann zudem (für jeden Typ eines Verbindungsmoduls) so ausgebildet sein, dass an seiner Umfangswandung, die in den komplementär ausgebildeten Stecker 120a eines Anbau-Grundmoduls eingreift, ein Adressschalter 136 integriert ist. Dieser kann ein oder mehrere mechanische Schaltmittel, beispielsweise Stellräder, aufweisen, die in Verbindung mit einer zugeordneten Adressierelektronik und oder -software eine Busadresse des jeweiligen Verbindungsmoduls 110 festlegen. Durch das Vorsehen der Schaltmittel am Steckerumfang (d.h. am Umfang eines entsprechend ausgebildeten Steckers bzw. am Umfang eines Doms oder Flansches des Gehäuses) sind diese im demontierten Zustand von Verbindungsmodul 110 und Anbau-Grundmodul 108 leicht zugänglich und im montierten Zustand gegen ein unabsichtliches Betätigen und gegen Umwelteinflüsse geschützt.

Fig. 6 zeigt ein Verbindungsmodul 210, welches als vollständige Wägezelle ausgebildet ist. Die Wägezelle kann nach dem Prinzip der elektromagnetischen Kraftkompensation arbeiten und mit einer Monoblock-Mechanik ausgerüstet sein. Selbstverständlich kann die Wägezelle auch nach jedem beliebigen anderen Prinzip arbeiten, beispielsweise mittel Dehnungsmesstreifen oder nach dem Prinzip der schwingenden Seite, und entsprechend ausgebildet sein. Die Wägezelle kann die gesamte Elektronik (oder Teile oder Komponenten hiervon) beinhalten, die zur Erfassung und gegebenenfalls Verarbeitung der Messwerte für die Gewichtskraft erforderlich ist, die über den Lastaufnehmer 212 auf die Wägezelle eingeleitet wird. Zusätzlich zu dem Lastaufnehmer 212 können bei dem Verbindungsmodul 210 über denselben Anschluss auch eine oder mehrere elektrische Verbindungen zu der betreffenden weiteren Komponente, beispielsweise einem Förderband mit Antrieb für eine Mehrspurwaage, geführt werden. Das Gehäuse 126 des als Wägezelle ausgebildeten Verbindungsmodul 210 kann ebenso ausgebildet sein, wie vorstehend in Verbindung mit dem als reines Elektronikmodul ausgebildeten Verbindungsmodul 110 beschrieben. Dies gilt auch für das Vorsehen einer optischen Anzeige 134, für den Status der Wägezelle bzw. des Verbindungsmoduls 210.

Weiterhin können auch das Basis-Grundmodul 102 und jedes Anbau-Grundmodul 108 Gehäuse aufweisen, die in analoger Weise ausgebildet sind.

Die Montage der einzelnen Module einer modularen Vorrichtung 100 nach der Erfindung kann flexibel erfolgen. Beispielsweise können zunächst die Verbindungsmodule 110, 210 mit den jeweiligen Anbau-Grundmodulen und anschließend die vormontierten Erweiterungsmodule 104 zu einem Stapel von Verbindungsmodulen verbunden werden. Anschließend kann das Basis-Grundmodul 102 an der gewünschten Seite des Stapels von Erweiterungsmodulen angeordnet und mit diesem verbunden werden. Selbstverständlich kann auch zunächst das erste Erweiterungsmodul 104 mit dem Basis-Grundmodul 102 verbunden werden, um anschließend ein Erweiterungsmodul 104 nach dem anderen mit dem jeweils zuvor montierten Erweiterungsmodul 104 zu verbinden. Dabei kann, wie vorstehend erläutert, das letzte (äußerste) Erweiterungsmodul 104 ein Anbau-Grundmodul 108 aufweisen, welches als Endmodul ausgebildet ist.

Soll die modulare wägetechnische Vorrichtung 100 an einem Trägerelement befestigt werden, so können auch zunächst sämtliche Anbau-Grundmodule mit dem Basis-Grundmodul 102 verbunden werden. Diese Einheit kann dann mittels Schrauben, welche die Bohrungen 122 der Anbau-Module durchragen, an dem Trägerelement befestigt werden. Anschließend können dann die Verbindungsmodule 110, 210 in die Anbau-Grundmodule 108 eingesteckt und gegebenenfalls mit den Schrauben 112 auf diesen fixiert werden.

Es sei darauf hingewiesen, dass erfindungsgemäß ein Gesamtsystem geschaffen werden kann, welches ein universelles Basis-Grundmodul 102 mit einer gewünschten Anzahl von in einer gewünschten Weise ausgebildeten Erweiterungsmodulen umfasst. Die Erweiterungsmodule 104 müssen dabei nicht unbedingt gleichartige bzw. identische Verbindungsmodule 110, 210 aufweisen. Vielmehr ist es möglich, eine beliebige Anzahl unterschiedlicher Typen von Verbindungsmodulen 110, 210 vorzusehen, die mit den Anbau-Grundmodulen 108 verbunden bzw. in diese eingesteckt werden können. Dabei ist es möglich, für jedes Verbindungsmodul 110, 210 einen beliebigen Steckplatz bzw. ein zuzuordnendes Anbau-Grundmodul zu wählen. Damit ist es möglich, einen gewünschten Typ eines Verbindungsmoduls 110, 210 an einer beliebigen Position in einem Stapel von Erweiterungsmodulen 104 vorzusehen. Es sind auch verschieden breite Anbau-Grundmodule 108 mit entsprechend breiten (oder sogar unterschiedlich breiten) Verbindungsmodulen 110, 210 möglich, z.B. für Wägezellen mit verschiedener Traglast und entsprechend verschieden breiter Monoblock-Mechanik.

Soll eine bereits bestehende modulare wägetechnische Vorrichtung 100 erweitert werden, so muss lediglich ein weiteres Erweiterungsmoduls 104 hinzugefügt werden. Ist das Anbau-Grundmodul 108 des äußersten Erweiterungsmodul 104 eines Stapels von Erweiterungsmodulen als Endmodul ausgebildet, so muss zunächst der Stapel von Erweiterungsmodulen aufgetrennt werden, d. h. an einer beliebigen Position muss ein Anbau-Grundmodul 108 von dem benachbarten Modul getrennt werden. An dieser Trennstelle kann dann das zusätzliche Erweiterungsmodul 104 (bzw. zunächst das zusätzliche Anbau-Grundmodul 108) eingesetzt werden.

Die Erfindung bietet zudem die Möglichkeit eines extrem einfachen Austausches von Verbindungsmodulen 110, 210. Hierzu muss lediglich die betreffende Verbindung zwischen dem Verbindungsmodul und dem zugehörigen Anbau-Grundmodul 108 getrennt und das Verbindungsmodul 110, 210 durch ein Verbindungsmodul desselben oder auch eines anderen Typs ersetzt werden.

Erfindungsgemäß bietet es sich an, die Anbau-Grundmodule 108 als rein passive elektromechanische Einheiten auszubilden, d. h. diese Module umfassen insbesondere lediglich passive elektrische Komponenten, wie elektrische Leitungen, Verzweigungen von elektrischen Leitungen, elektrische Stecker und gegebenenfalls passive elektrische Bauteile wie Kondensatoren, Widerstände und dergleichen. Auf diese Weise wird erreicht, dass, insbesondere durch den Verzicht auf eine (aktive) Signalverarbeitung in den Anbau-Grundmodulen 108, die Wahrscheinlichkeit eines elektrischen Defekts sehr gering ist. Ein elektrischer Defekt oder mechanischer Defekt (insbesondere bei einem als Wägezelle ausgebildeten Verbindungsmodul) wird daher mit überwiegender Wahrscheinlichkeit nur in den Verbindungsmodul 110, 210 vorliegen. Der Austausch eines Verbindungsmoduls kann in einem solchen Fall noch schneller und einfacher erfolgen, als wenn auch das zugehörige Anbau-Grundmodul 108 aus dem Stapel von Erweiterungsmodulen 104 entfernt werden müsste.

Es wäre jedoch grundsätzlich ebenfalls möglich, die Erweiterungsmodule integriert, d.h. als Einheit, auszubilden und diese nicht als zwei separate Einheiten in Form eines Anbau-Grundmoduls und eines damit lösbar verbundenen Verbindungsmoduls zu realisieren. Eine solche Lösung kann sich insbesondere im Fall von Erweiterungsmodulen anbieten, die als Wägezellen ausgebildet sind.

Es ist ebenfalls möglich, das Basis-Grundmodul zweiteilig auszubilden, bestehend aus einem Anbau-Grundmodul der vorstehend beschriebenen Art und einem damit verbindbaren bzw. verbundenen Basis-Verbindungsmodul, welches die Funktionalität eines Basis-Grundmoduls realisiert. Das Basis-Verbindungsmodul kann dabei in konstruktiver Hinsicht, insbesondere hinsichtlich der mechanischen und elektrischen Verbindungen in gleicher Weise ausgestaltet sein, wie die zuvor beschriebenen Verbindungsmodule. Hierdurch kann die Position des Basis-Grundmoduls innerhalb der gesamten modularen messtechnischen Vorrichtung entsprechend den Bedürfnissen der jeweiligen Anwendung frei gewählt werden.

Die Erfindung schafft somit die Möglichkeit eine modulare wägetechnische Vorrichtung zu realisieren, die äußerst flexibel auf den jeweiligen Anwendungsfall anpassbar und einfach änderbar sowie einfach erweiterbar ist.

### Bezugszeichenliste

- 100: modulare wägetechnische Vorrichtung
- 102: Basis-Grundmodul
- 104: Erweiterungsmodul
- 106: Anschluss
- 108: Anbau-Grundmodul
- 110: Verbindungsmodul
- 112: Schrauben
- 113: Vorkragung
- 114: elektrische Steckerverbindung
- 114a: elektrische Stecker
- 114b: elektrische Stecker
- 115: umlaufende Dichtung
- 116: mechanische Verbindung
- 118: Stapel von Erweiterungsmodul
- 120: elektrische Steckerverbindung
- 120a: elektrische Stecker
- 120b: elektrische Stecker
- 122: Bohrung
- 124: Gewindebohrung
- 126: Gehäuse
- 128: topfförmiges Gehäuseteils
- 130: elektrischer Stecker
- 132: Gehäusedeckel
- 134: optische Anzeige
- 136: Adressschalter

- 200: modulare wägetechnische Vorrichtung
- 210: Verbindungsmodul (Wägezelle)
- 212: Lastaufnehmer

## Patentansprüche

1. Modulare messtechnische Vorrichtung, insbesondere für eine mehrspurige Waage,
(a) mit einem Basis-Grundmodul (102) und einer Mehrzahl von Erweiterungsmodulen (104),
(b) wobei jedes Erweiterungsmodul (104) aus einem Anbau-Grundmodul (108) und einem mit diesem lösbar mechanisch und elektrisch verbunden Verbindungsmodul (110, 210) besteht,
(c) wobei die Erweiterungsmodule (104) einander benachbart angeordnet und jeweils lösbar elektrisch und mechanisch miteinander zu einem Stapel (118) von Erweiterungsmodulen (104) verbunden sind und wobei das Basis-Grundmodul (102) lösbar elektrisch und mechanisch mit einem an einem Ende des Stapels (118) liegenden Erweiterungsmodule (104) des Stapels (118) von Erweiterungsmodulen (104) verbunden ist, und
(d) wobei die lösbare mechanische und elektrische Verbindung der Erweiterungsmodule (104) untereinander sowie die lösbare mechanische und elektrische Verbindung des Basis-Grundmoduls (102) mit dem benachbarten Erweiterungsmodul (104) ausschließlich durch eine lösbare elektrische und mechanische Verbindung der jeweils benachbarten Anbau-Grundmodule (108) untereinander sowie des Basis-Grundmoduls (102) mit dem Anbau-Grundmodul (108) seines benachbarten Erweiterungsmoduls (104) erfolgen
(e) wobei die Verbindungsmodule (110, 210) als elektronische Auswerte- und/oder Steuereinheiten für wägetechnische Komponenten ausgebildet sind und/oder wobei eines, mehrere oder alle Verbindungsmodule (210) als Wägezellen ausgebildet sind,
(f) wobei das Basis-Grundmodul (102), die Anbau-Grundmodule (108) und die Verbindungsmodule (110, 210) jeweils ein geschlossenes, staubdichtes und wasserdichtes Gehäuse (126) aufweisen.

2. Modulare messtechnische Vorrichtung nach Anspruch 1, **dadurch gekennzeichnet, dass** das Basis-Grundmodul (102) und das Anbau-Grundmodul (108) seines benachbarten Erweiterungsmoduls (104) sowie die Anbau-Grundmodule (108) jeweils benachbarter Erweiterungsmodule (104) jeweils mittels zumindest eines elektrischen Busanschlusses elektrisch verbunden sind, wobei die elektrische Verbindung jeweils als Steckerverbindung (114) ausgebildet ist, die vorzugsweise gleichzeitig eine mechanische Verbindung bewirkt.

3. Modulare messtechnische Vorrichtung nach Anspruch 1 oder 2, **dadurch gekennzeichnet, dass** die jeweils benachbarte Anbau-Grundmodule (108) sowie das Basis-Grundmodul (102) und dessen benachbartes Anbau-Grundmodul (108) an einander zugewandten Stirnseiten komplementäre elektrische Stecker (114a, 114b) zur Bildung der Steckverbindung (114) aufweisen, wobei die Stecker (114a, 114b) vorzugsweise so ausgebildet sind, dass sich die einander zugewandten Stirnseiten im verbundenen Zustand berühren oder nur ein geringer Spalt verbleibt, der vorzugsweise kleiner als 1 mm, höchst vorzugsweise kleiner als 0,5 mm ist.

4. Modulare messtechnische Vorrichtung nach Anspruch 2 oder 3, **dadurch gekennzeichnet, dass** jedes Anbau-Grundmodul (108) an einer Oberseite mittels einer elektrischen Steckerverbindung (120) mit dem zugeordneten Verbindungsmodul (110, 210) elektrisch und vorzugsweise auch mechanisch verbunden ist.

5. Modulare messtechnische Vorrichtung nach Anspruch 4, **dadurch gekennzeichnet, dass** der elektrische Stecker (120a) der elektrischen Steckverbindung (120), welcher an dem betreffenden Anbau-Grundmoduls (108) vorgesehen ist, sämtliche Busanschlüsse des zumindest einen Busanschlusses bereitstellt.

6. Modulare messtechnische Vorrichtung nach Anspruch 4 oder 5, **dadurch gekennzeichnet, dass** jedes Verbindungsmodul (110, 210) durch eine zusätzliche mechanische Verbindung, vorzugsweise mittels einer Schraub- oder Rastverbindung, mit dem jeweiligen Anbau-Grundmodul (108) verbunden ist.

7. Modulare messtechnische Vorrichtung nach einem der Ansprüche 3 bis 6, **dadurch gekennzeichnet,**
(a) **dass** alle Anbau-Grundmodule (108) identisch ausgebildet sind oder
(b) **dass** alle Anbau-Grundmodule (108) mit Ausnahme des letzten Anbau-Grundmoduls (108), das am Ende des Stapels (118) von Erweiterungsmodulen (104) angeordnet ist, das nicht mit dem Basis-Grundmodul (102) verbunden ist, identisch ausgebildet sind und dass dieses letzte Anbau-Grundmodul (108) an der Stirnseite, die nicht mit einem weiteren Anbau-Grundmodul (108) verbunden ist, keinen Stecker (114a) aufweist.

8. Modulare messtechnische Vorrichtung nach Anspruch 2, **dadurch gekennzeichnet, dass** jedes Anbau-Grundmodul (108) ein mechanisches Verbindungsmittel zur mechanischen Verbindung des Anbau-Grundmoduls (108) mit einem Trägerelement, beispielsweise einem Gehäuse, aufweist.

9. Modulare messtechnische Vorrichtung nach einem der vorhergehenden Ansprüche, **dadurch gekennzeichnet, dass** die Verbindungsmodule (110, 210) als elektronische Auswerte- und/oder Steuereinheiten für Wägezellen, Kraftsensoren oder Beschleunigungssensoren ausgebildet sind, wobei die Verbindungsmodule (110, 210) vorzugsweise als Stecker (130) ausgebildete elektrische Anschlüsse für die elektrische Verbindung der zugeordneten wägetechnischen Komponenten aufweisen.

10. Modulare messtechnische Vorrichtung nach einem der vorhergehenden Ansprüche, **dadurch gekennzeichnet, dass** die Verbindungsmodule (110, 210) Einstellmittel, insbesondere Schalter, zur Einstellung einer Busadresse des jeweiligen Verbindungsmoduls (110, 210) aufweisen, wobei die Einstellmittel vorzugsweise am Umfang eines Bundes eines Steckers (120b) vorgesehen sind, welcher in einen damit zusammenwirkenden Stecker (120a) des betreffenden Anbau-Grundmoduls (108) eingreift.

11. Modulare messtechnische Vorrichtung nach einem der vorhergehenden Ansprüche, **dadurch gekennzeichnet, dass** das Basis-Grundmodul (102) eine Stromversorgung für die Erweiterungsmodule (104), insbesondere die Verbindungsmodule (110, 210), aufweist oder bereitstellt.

12. Modulare messtechnische Vorrichtung nach einem der vorhergehenden Ansprüche, **dadurch gekennzeichnet, dass** das Basis-Grundmodul (102) eine Steuereinheit für die Steuerung der Verbindungsmodule (110, 210) und/oder der damit verbundenen wägetechnischen Komponenten und/oder zur Erfassung und/oder Auswertung und/oder Weiterleitung der Signale und/oder der Messwerte, die von den Verbindungsmodulen geliefert werden, umfasst.

13. Modulare messtechnische Vorrichtung nach einem der vorhergehenden Ansprüche, **dadurch gekennzeichnet, dass** das Basis-Grundmodul (102) elektrische Anschlüsse (106) zur Verbindung mit einer übergeordneten Steuereinheit aufweist.

14. Modulare messtechnische Vorrichtung nach einem der Ansprüche 3 bis 13, **dadurch gekennzeichnet, dass** auf der Oberfläche einer oder beider der einander zugewandten Gehäusewandungen von benachbarten Modulen (102, 108, 110, 210) Dichtmittel vorgesehen sind, welche die betreffenden komplementären elektrischen Stecker (114a, 114b; 120a, 120b) umgeben und so ausgebildet sind, dass bei einem Herstellen der Steckverbindung zwischen den Modulen (102, 108, 110, 210) eine staub- und wasserdichte Steckverbindung erzeugt wird.

15. Modulare messtechnische Vorrichtung nach Anspruch 14, **dadurch gekennzeichnet, dass** eine mechanische Verbindung, insbesondere eine Schraubverbindung zwischen den Gehäusen von benachbarten Modulen (102, 108, 110, 210) vorgesehen ist, welche so ausgebildet ist, dass ein vorbestimmter Anpressdruck zwischen den einander zugewandten Stirnseiten der betreffenden benachbarten Module (102, 108, 110, 210) erzeugt wird.

## Claims

1. Modular metrological device, in particular for a multitrack weighing scale,
(a) comprising a basic base module (102) and a plurality of extension modules (104),
(b) wherein each extension module (104) consists of an add-on base module (108) and a connection module (110, 210) detachably mechanically and electrically connected thereto,
(c) wherein the extension modules (104) are arranged adjacent to one another and are each detachably electrically and mechanically connected to one another to form a stack (118) of extension modules (104), and wherein the basic base module (102) is detachably electrically and mechanically connected to an extension module (104) of the stack (118) of extension modules (104), which is located at one end of the stack (118), and
(d) wherein the detachable mechanical and electrical connection of the extension modules (104) to one another and the detachable mechanical and electrical connection of the basic base module (102) to the adjacent extension module (104) is made exclusively by a detachable electrical and mechanical connection of the adjacent add-on base modules (108) to one another and of the basic base module (102) to the add-on base module (108) of its adjacent extension module (104)
(e) wherein the connection modules (110, 210) are designed as electronic evaluation and/or control units for weighing components and/or wherein one, a plurality of or all connection modules (210) are designed as weighing cells,
(f) wherein the basic base module (102), the add-on base modules (108) and the connection modules (110, 210) each have a closed, dust-tight and watertight housing (126).

2. Modular metrological device according to claim 1, **characterized in that** the basic base module (102) and the add-on base module (108) of its adjacent extension module (104) and the add-on base modules (108) of adjacent extension modules (104) are each electrically connected by means of at least one electrical bus connection, the electrical connection being designed in each case as a plug connection (114), which preferably simultaneously creates a mechanical connection.

3. Modular metrological device according to either claim 1 or claim 2, **characterized in that** the adjacent add-on base modules (108) as well as the basic base module (102) and its adjacent add-on base module (108) have complementary electrical plugs (114a, 114b) at mutually facing end faces for forming the plug connection (114), the plugs (114a, 114b) being preferably designed such that the mutually facing end faces touch each other in the connected state or only a small gap remains, which is preferably less than 1 mm, most preferably less than 0.5 mm.

4. Modular metrological device according to either claim 2 or claim 3, **characterized in that** each add-on base module (108) is electrically and preferably also mechanically connected on an upper face to the associated connection module (110, 210) by means of an electrical plug connection (120).

5. Modular metrological device according to claim 4, **characterized in that** the electrical plug (120a) of the electrical plug connection (120), which is provided on the relevant add-on base module (108), provides all the bus connections of the at least one bus connection.

6. Modular metrological device according to either claim 4 or claim 5, **characterized in that** each connection module (110, 210) is connected to the relevant add-on base module (108) by an additional mechanical connection, preferably by means of a screw or snap-in connection.

7. Modular metrological device according to any of claims 3 to 6, **characterized**
(a) **in that** all add-on base modules (108) are identically designed or
(b) **in that** all add-on base modules (108), with the exception of the last add-on base module (108), which is arranged at the end of the stack (118) of extension modules (104) that is not connected to the basic base module (102), are identically designed **and in that** that this last add-on base module (108) has no plug (114a) on the end face that is not connected to a further add-on base module (108).

8. Modular metrological device according to claim 2, **characterized in that** each add-on base module (108) has a mechanical connecting means for mechanically connecting the add-on base module (108) to a support element, for example a housing.

9. Modular metrological device according to any of the preceding claims, **characterized in that** the connection modules (110, 210) are designed as electronic evaluation and/or control units for weighing cells, force sensors or acceleration sensors, the connection modules (110, 210) preferably having electrical connections designed as plugs (130) for the electrical connection of the associated weighing components.

10. Modular metrological device according to any of the preceding claims, **characterized in that** the connection modules (110, 210) have setting means, in particular switches, for setting a bus address of the relevant connection module (110, 210), the setting means preferably being provided on the circumference of a collar of a plug (120b) which engages in a plug (120a) of the relevant add-on base module (108) interacting therewith.

11. Modular metrological device according to any of the preceding claims, **characterized in that** the basic base module (102) has or provides a power supply for the extension modules (104), in particular the connection modules (110, 210).

12. Modular metrological device according to any of the preceding claims, **characterized in that** the basic base module (102) comprises a control unit for controlling the connection modules (110, 210) and/or the weighing components connected thereto and/or for recording and/or evaluating and/or forwarding the signals and/or the measured values supplied by the connection modules.

13. Modular metrological device according to any of the preceding claims, **characterized in that** the basic base module (102) has electrical connections (106) for connection to a primary control unit.

14. Modular metrological device according to any of claims 3 to 13, **characterized in that** sealing means are provided on the surface of one or both of the mutually facing housing walls of adjacent modules (102, 108, 110, 210), which sealing means surround the respective complementary electrical plugs (114a, 114b; 120a, 120b) and are designed such that a dust-tight and watertight plug connection is produced when the plug connection is made between the modules (102, 108, 110, 210).

15. Modular metrological device according to claim 14, **characterized in that** a mechanical connection, in particular a screw connection, is provided between the housings of adjacent modules (102, 108, 110, 210), which is designed in such a way that a predetermined contact pressure is generated between the mutually facing end faces of the respective adjacent modules (102, 108, 110, 210).

## Revendications

1. Dispositif de mesure modulaire, en particulier pour une balance à plusieurs voies,
(a) comportant un module de base fondamental (102) et une pluralité de modules d'extension (104),
(b) dans lequel chaque module d'extension (104) est constitué d'un module de base annexe (108) et d'un module de liaison (110, 210) relié mécaniquement, électriquement et de manière amovible à celui-ci,
(c) dans lequel les modules d'extension (104) sont disposés de manière adjacente les uns aux autres et sont respectivement reliés électriquement, mécaniquement et de manière amovible les uns aux autres pour former un empilement (118) de modules d'extension (104) et dans lequel le module de base fondamental (102) est relié électriquement, mécaniquement et de manière amovible à un module d'extension (104) de l'empilement (118) de modules d'extension (104) situé à une extrémité de l'empilement (118), et
(d) dans lequel la liaison mécanique, électrique et amovible des modules d'extension (104) entre eux ainsi que la liaison mécanique, électrique et amovible du module de base fondamental (102) avec le module d'extension (104) adjacent sont effectuées exclusivement par une liaison électrique, mécanique et amovible des modules de base annexes (108) respectivement adjacents entre eux ainsi que du module de base fondamental (102) avec le module de base annexe (108) de son module d'extension (104) adjacent
(e) dans lequel les modules de liaison (110, 210) sont réalisés comme des unités d'évaluation et/ou de commande électroniques pour des composants de pesage et/ou dans lequel un, plusieurs ou tous les modules de liaison (210) sont réalisés comme des cellules de pesage,
(f) dans lequel le module de base fondamental (102), les modules de base annexes (108) et les modules de liaison (110, 210) présentent respectivement un boîtier (126) fermé, étanche à la poussière et étanche à l'eau.

2. Dispositif de mesure modulaire selon la revendication 1,
**caractérisé en ce que** le module de base fondamental (102) et le module de base annexe (108) de son module d'extension (104) adjacent, ainsi que les modules de base annexes (108) de modules d'extension (104) respectivement adjacents, sont respectivement reliés électriquement au moyen d'au moins un raccord de bus électrique, dans lequel la liaison électrique est respectivement réalisée sous la forme d'une liaison par connecteurs (114) qui crée de préférence simultanément une liaison mécanique.

3. Dispositif de mesure modulaire selon la revendication 1 ou 2,
**caractérisé en ce que** les modules de base annexes (108) respectivement adjacents ainsi que le module de base fondamental (102) et son module de base annexe (108) adjacent présentent, sur des faces frontales tournées les unes vers les autres, des connecteurs (114a, 114b) électriques complémentaires pour former la liaison par connecteurs (114), dans lequel les connecteurs (114a, 114b) sont de préférence réalisés de sorte que les faces frontales tournées les unes vers les autres se touchent à l'état relié ou que seule une faible fente subsiste, laquelle est de préférence inférieure à 1 mm, le plus préférablement inférieure à 0,5 mm.

4. Dispositif de mesure modulaire selon la revendication 2 ou 3,
**caractérisé en ce que** chaque module de base annexe (108) est relié électriquement et de préférence également mécaniquement, sur une face supérieure, au module de liaison (110, 210) associé au moyen d'une liaison par connecteurs (120) électrique.

5. Dispositif de mesure modulaire selon la revendication 4,
**caractérisé en ce que** le connecteur (120a) électrique de la liaison par connecteurs (120) électrique, lequel est prévu sur le module de base annexe (108) concerné, fournit tous les raccords de bus de l'au moins un raccord de bus.

6. Dispositif de mesure modulaire selon la revendication 4 ou 5,
**caractérisé en ce que** chaque module de liaison (110, 210) est relié au module de base annexe (108) respectif par une liaison mécanique supplémentaire, de préférence au moyen d'une liaison par vis ou par encliquetage.

7. Dispositif de mesure modulaire selon l'une des revendications 3 à 6, **caractérisé en ce**
(a) **que** tous les modules de base annexes (108) sont réalisés de manière identique ou
(b) **que** tous les modules de base annexes (108) sont réalisés de manière identique à l'exception du dernier module de base annexe (108) disposé à l'extrémité de l'empilement (118) de modules d'extension (104), lequel n'est pas relié au module de base fondamental (102), et que ledit dernier module de base annexe (108) ne présente pas de connecteur (114a) sur la face frontale qui n'est pas reliée à un autre module de base annexe (108).

8. Dispositif de mesure modulaire selon la revendication 2,
**caractérisé en ce que** chaque module de base annexe (108) présente un moyen de liaison mécanique permettant de relier mécaniquement le module de base annexe (108) à un élément de support, par exemple un boîtier.

9. Dispositif de mesure modulaire selon l'une des revendications
précédentes, **caractérisé en ce que** les modules de liaison (110, 210) sont réalisés sous forme d'unités d'évaluation et/ou de commande électroniques pour des cellules de pesage, des capteurs de force ou des capteurs d'accélération, dans lequel les modules de liaison (110, 210) présentent de préférence des raccords électriques réalisés sous forme de connecteurs (130) pour la liaison électrique des composants de pesage associés.

10. Dispositif de mesure modulaire selon l'une des revendications
précédentes, **caractérisé en ce que** les modules de liaison (110, 210) présentent des moyens de réglage, en particulier des commutateurs, permettant de régler une adresse de bus du module de liaison (110, 210) respectif, dans lequel les moyens de réglage sont de préférence prévus au niveau de la circonférence d'une collerette d'un connecteur (120b), lequel connecteur vient en prise dans un connecteur (120a) coopérant avec celui-ci du module de base annexe (108) concerné.

11. Dispositif de mesure modulaire selon l'une des revendications
précédentes, **caractérisé en ce que** le module de base fondamental (102) présente ou fournit une alimentation en courant pour les modules d'extension (104), en particulier les modules de liaison (110, 210).

12. Dispositif de mesure modulaire selon l'une des revendications
précédentes, **caractérisé en ce que** le module de base fondamental (102) comprend une unité de commande pour la commande des modules de
liaison (110, 210) et/ou des composants de pesage reliés à ceux-ci et/ou pour la détection et/ou l'évaluation et/ou la transmission des signaux et/ou des valeurs de mesure qui sont délivrés par les modules de liaison.

13. Dispositif de mesure modulaire selon l'une des revendications
précédentes, **caractérisé en ce que** le module de base fondamental (102) présente des raccords électriques (106) pour la liaison avec une unité de commande supérieure.

14. Dispositif de mesure modulaire selon l'une des revendications 3 à 13, **caractérisé en ce que** des moyens d'étanchéité sont prévus sur la surface de l'une ou des deux parois de boîtier tournées l'une vers l'autre de modules (102, 108, 110, 210) adjacents, lesquels moyens d'étanchéité entourent les
connecteurs (114a, 114b ; 120a, 120b) électriques complémentaires concernés et sont réalisés de sorte que, lors de l'établissement de la liaison par connecteurs entre les modules (102, 108, 110, 210), une liaison par connecteurs étanche à la poussière et à l'eau est produite.

15. Dispositif de mesure modulaire selon la revendication 14,
**caractérisé en ce qu'**une liaison mécanique est prévue, en particulier une liaison par vis entre les boîtiers de modules (102, 108, 110, 210) adjacents, laquelle est réalisée de sorte qu'une pression de contact prédéterminée est produite entre les faces frontales tournées l'une vers l'autre des modules (102, 108, 110, 210) adjacents concernés.
